(19) Europäisches Patentamt / European Patent Office / Office européen des brevets

(11) **EP 3 352 350 A1**

(12) **EUROPEAN PATENT APPLICATION**
published in accordance with Art. 153(4) EPC

(43) Date of publication:
25.07.2018 Bulletin 2018/30

(51) Int Cl.:
*H02K 53/00* (2006.01)

(21) Application number: 16845571.5

(22) Date of filing: 01.07.2016

(86) International application number:
PCT/CN2016/088055

(87) International publication number:
WO 2017/045457 (23.03.2017 Gazette 2017/12)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 15.09.2015 CN 201610020729
15.09.2015 CN 201510581236

(71) Applicant: Zhong, Taiping
Yueyang, Hunan 414000 (CN)

(72) Inventor: Zhong, Taiping
Yueyang, Hunan 414000 (CN)

(74) Representative: Vitina, Maruta et al
Agency TRIA ROBIT
P.O. Box 22
1010 Riga (LV)

(54) **PERMANENT WATER MOTOR**

(57) A permanent water motor includes a battery (1), a permanent oil-pressure water-circulation vertical generator (2), an air conditioner (4) and an electric motor (3) which are integrated into a whole, wherein the battery is applied for start; the oil-pressure water-circulation permanent vertical generator is used to generate electricity; then the generated electricity is used to drive the air conditioner and the electric motor; and water discharged from the air conditioner is used as water energy of the generator for volatilization and supplementation, so that the permanent water motor is operated. The permanent water motor only relies on the water energy for support, and does not need any support from any other energy or any other external force. The electricity generated by the permanent water motor can drive various worldwide machines to permanently operate based on human needs.

Fig. 1

**Description**

<sup>T</sup>ECHNICAL FIELD

The present disclosure discloses a permanent water motor which is a new advanced main engine integrated by a battery, a permanent oil-pressure water-circulation vertical generator (the applicant has applied a Chinese patent application No. 201510325801.X for the generator), an air conditioner and an electric motor into a whole, wherein the battery is applied to starting; the oil-pressure water-circulation permanent vertical generator is used to generate electricity, while the electricity is used to drive the air conditioner and the electric motor; and water discharged from the air conditioner is used as water energy of the oil-pressure water-circulation permanent vertical generator for volatilization and supplementation. In this way, the permanent water motor of the present disclosure is operated without support from any other energy or any other external force. The water energy is relied on for support, and the electricity is relied on to drive various machines all over the world. The permanent water motor is permanently operated according to human needs, and supporting expense is zero.

(Note: battery + generator + air conditioner + electric motor = permanent water motor

permanent water motor = water motor = permanent motor)

BACKGROUND

Nowadays, electric motors, diesel engines and gasoline engines have been popularized worldwide. However, these main engines are single in action and inconvenient in use. Moreover, a large amount of various energies are needed for support when the engines are operated. Possession of these energies has become human enormous pressure and burden. Especially, use of these energies also seriously damages and pollutes the environment, affects climatic change, greatly consumes human resources and material resources and causes an enormous influence on human generation. A permanent water motor is invented herein in order to solve these serious problems generated by people and required to be solved by people but cannot be solved for long.

SUMMARY

The present disclosure discloses a permanent water motor which is a new advanced main engine formed by integrating a plurality of machines into a whole to drive permanent operation of various machines. The following technical solution is specifically adopted.

1. A permanent water motor, comprising a battery, a permanent oil-pressure water-circulation vertical generator, an air conditioner and an electric motor which are integrated into a whole, wherein the battery is used to start the oil-pressure water-circulation permanent vertical generator to generate electricity, and the electricity is used to drive the air conditioner and the electric motor; water discharged from the air conditioner is used as water energy of the generator for volatilization and supplementation; and the electric motor is used to drive various machines to permanently operate based on human needs.
2. The permanent water motor includes four functions. The first function is that the permanent water motor can be used especially as a generator. The second function is that the permanent water motor can be used especially as an air conditioner. The third function is that the permanent water motor can be used especially as a main engine. The four function is that the generator in the permanent water motor generates electricity outwards, the air conditioner outputs air outwards and the main engine drives other machines to permanently operate simultaneously.
3. The permanent water motor, wherein the permanent water motor is suitable for worldwide army, air force and navy and worldwide industries, and the supporting expense is none.

The present disclosure discloses a permanent water motor which is a new advanced main engine developed to apply to worldwide army, air force and navy and worldwide industries. The permanent water motor can be integrally handled flexibly, and is convenient in use. The permanent water motor can transcend, replace and eliminate all worldwide main engines: an electric motor, a diesel engine, a gasoline engine and other energy machines. The permanent water motor has four functions, and is unique in present world. The first function is that the permanent water motor can be used especially as a generator. The second function is that the permanent water motor can be used especially as an air conditioner. The third function is that the permanent water motor can be used especially as a main engine. The four function is that the generator in the permanent water motor generates electricity outwards, the air conditioner outputs air outwards and the main engine drives other machines to permanently operate simultaneously. The operation of the permanent water motor does not need support from any other energy or any other external force. The operation of the permanent water motor does not have any negative effect on people, air, environments, climates, animals or plants, and the supporting expense is zero. The permanent water motor is the only preferred choice for people to adopt.

If four disclosure applications from the applicant, which are respectively 1. full automatic multi-emergency blocking type brake, 2. static water circulation electricity generation and drought and waterlogging resistance, 3. oil-pressure water-circulation permanent vertical generator, and 4. permanent water motor, can be comprehensively applied in time, applicant personally thinks that four problems would have been thoroughly solved around the world. Firstly, the problem is solved that it is difficult to completely eliminate worldwide traffic accidents of car crash on the road. Secondly, the problems are solved of satisfying annual production and living water worldwide and of difficult management and control of drought and waterlogging (except for seaquake and flood over levee). Thirdly, the problem is solved that it is difficult to transcend, replace and thoroughly eliminate all other energies as long as a small number of fixed water energy is used worldwide. Fourthly, the problems are solved of difficulty in eliminating heat generated by energy and emitting exhaust gas due to the worldwide use of the energy, controlling the reduction of earth temperature and optimizing environments.

### BRIEF DESCRIPTION OF THE DRAWINGS

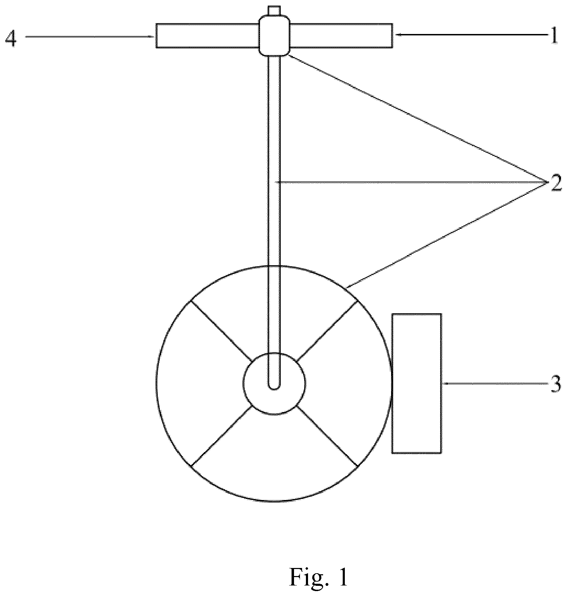

Fig. 1 shows a schematic diagram of the device of the present disclosure, wherein,

> 1 indicates the battery;
> 2 indicates the permanent oil-pressure water-circulation vertical generator;
> 3 indicates the electric motor; and
> 4 indicates the air conditioner.

### DETAILED DESCRIPTION OF THE DISCLOSURE

In the figure, the battery 1 is fixed to the right side of the upper end of the generator 2; the electric motor 3 is fixed to the right side of the lower end of the generator 2; and the air conditioner 4 is fixed to the left side of the upper end of the generator 2. However, the battery 1 is used to start the generator 2 to generate electricity. The electricity is used to drive the air conditioner 4. Water discharged from the air conditioner 4 is used as water energy of the generator 2 for volatilization and supplementation. Meanwhile, the electricity is used to drive the electric motor 3, and the electric motor 3 is used to drive other machines to permanently operate according to human needs.

### Claims

1. A permanent water motor, comprising
   a battery, a permanent oil-pressure water-circulation vertical generator, an air conditioner and an electric motor integrated into a whole, wherein
   the battery is used to start the permanent oil-pressure water-circulation vertical generator to generate electricity;
   the electricity is used to drive the air conditioner and the electric motor;
   water discharged from the air conditioner is used as water energy of the generator for volatilization and supplementation; and
   the electric motor is used to drive various machines to permanently operate based on human needs.

2. The permanent water motor according to claim 1, wherein
   the permanent water motor comprises four functions, wherein
   firstly, the permanent water motor can be used especially as a generator;
   secondly, the permanent water motor can be used especially as an air conditioner;
   thirdly, the permanent water motor can be used especially as a main engine; and
   fourthly, the generator in the permanent water motor generates electricity outwards, the air conditioner outputs air outwards and the main engine drives other machines to permanently operate simultaneously.

3. The permanent water motor according to claim 1, wherein
   the permanent water motor is suitable for all industries, and supporting expense is zero.

Fig. 1

# INTERNATIONAL SEARCH REPORT

| International application No. |
| --- |
| **PCT/CN2016/088055** |

**A. CLASSIFICATION OF SUBJECT MATTER**

H02K 53/00 (2006.01) i

According to International Patent Classification (IPC) or to both national classification and IPC

**B. FIELDS SEARCHED**

Minimum documentation searched (classification system followed by classification symbols)

H02K, F03B 13

Documentation searched other than minimum documentation to the extent that such documents are included in the fields searched

Electronic data base consulted during the international search (name of data base and, where practicable, search terms used)

CNPAT, WPI, EPODOC, CNKI: water motor, water turbine, hydroelectricity, perpetual motion machine, power generation, cooling water, condensate water, electric motor, water energy generator, waterpower, electric power generator, electric generator, permanent motor, water, fluid, battery, air condition+, refrigeration, water circulation, motor

**C. DOCUMENTS CONSIDERED TO BE RELEVANT**

| Category* | Citation of document, with indication, where appropriate, of the relevant passages | Relevant to claim No. |
| --- | --- | --- |
| Y | CN 203239491 U (SHANGHAI JINJIANG ELECTRONIC TECHNIQUE ENGINEERING CO., LTD.), 16 October 2013 (16.10.2013), description, paragraphs [0031]-[0043], claims 1-6, and figure 1 | 1-3 |
| Y | CN 202732202 U (DONG, Shuilu), 13 February 2013 (13.02.2013), description, paragraphs [0014] and [0015], and figure 1 | 1-3 |
| PX | CN 105576941 A (ZHONG, Taiping), 11 May 2016 (11.05.2016), claims 1-3 | 1-3 |
| A | CN 103280946 A (TAO, Jun), 04 September 2013 (04.09.2013), the whole document | 1-3 |
| A | JP S5136748 A (TAKASAGO THERMAL ENGINEERING), 27 March 1976 (27.03.1976), the whole document | 1-3 |

☐ Further documents are listed in the continuation of Box C.    ☒ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 25 July 2016 (25.07.2016) | **14 September 2016 (14.09.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**XU, Zhenxia**<br><br>Telephone No.: (86-10) **62411785** |

Form PCT/ISA/210 (second sheet) (July 2009)

## INTERNATIONAL SEARCH REPORT
### Information on patent family members

International application No.

**PCT/CN2016/088055**

| Patent Documents referred in the Report | Publication Date | Patent Family | Publication Date |
|---|---|---|---|
| CN 203239491 U | 16 October 2013 | None | |
| CN 202732202 U | 13 February 2013 | None | |
| CN 105576941 A | 11 May 2016 | None | |
| CN 103280946 A | 04 September 2013 | None | |
| JP S5136748 A | 27 March 1976 | JP S5527259 B2 | 19 July 1980 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510325801X